Europäisches Patentamt

European Patent Office

Office européen des brevets

(11) Publication number: **0 191 249**
**A2**

(12)

# EUROPEAN PATENT APPLICATION

(21) Application number: 85309530.5

(22) Date of filing: 30.12.85

(51) Int. Cl.⁴: **G 01 N 15/08**

(30) Priority: 12.02.85 US 700829

(43) Date of publication of application: 20.08.86
Bulletin 86/34

(84) Designated Contracting States: CH DE FR GB IT LI

(71) Applicant: **Bradshaw, Thomas I., 66 Sayre Drive,
Princeton New Jersey 08540 (US)**

(72) Inventor: **Bradshaw, Thomas I., 66 Sayre Drive, Princeton
New Jersey 08540 (US)**

(74) Representative: **Mair, Richard Douglas et al, F.J.
Cleveland & Company 40-43 Chancery Lane, London
WC2A 1JQ (GB)**

(54) A method and apparatus for tangential flow testing of microporous and ultra filter membranes.

(57) A method and apparatus for laboratory scale testing of microporous and ultra filter membranes to predict their operation on an industrial scale are described, which involve tangential flow of a fluid to be processed over the test membrane (32) supported on a screen (34) in a filtrate pocket (46) of a lower plastic plate (30) provided with filtrate exit ports (36) communicating with a conduit to a filtrate/permeate receiving vessel. The device also includes an upper plastic plate (28) having an inlet manifold (42), intermediate flow channels (38) and an exit manifold (66) for the recycling of the bulk of the process liquid to the apparatus for subsequent passes. The device also includes upper and lower metal plates (10, 12) to support the internal structure and having inlet and outlet ports (24, 26) for process fluid and filtrate outlet ports in the lower metal plate (12).

Pressure gauges (18) in pressure sensing ports (22) adjacent the process liquid inlet and outlet and external conduits are also provided.

A METHOD AND APPARATUS FOR TANGENTIAL
FLOW TESTING OF MICROPOROUS AND
ULTRA FILTER MEMBRANES

As is well-known in the art, microporous and ultra filter membranes have many laboratory and industrial scale biological and other applications. Inasmuch as a wide variety of such membranes are available from many sources and each has its own peculiar properties, it is apparent that it would be desirable to have a method and apparatus for testing such membranes on a laboratory scale in a way which would reliably predict their performance for any given application on an industrial scale. This would, of course, save the expense of testing many membranes on an industrial scale in order to determine the optimum membrane for a given use.

While test devices for this purpose have been developed previously, they have been complex, expensive, difficult to use and not satisfactorily reliable to predict accurately the performance of the membrane on an industrial scale.

It is, therefore, a primary object of this invention to provide a method and device for testing membranes on a laboratory scale, capable of reliably predicting the performance of the membrane on an industrial scale.

It is another object of the invention to provide such a method and device, which are simple in operation and structure and also relatively inexpensive to make and use.

## Summary of the Invention

The foregoing and other objects of the invention, which will become apparent below, are achieved by providing a simple laboratory scale device for testing membranes in the form of a tangential flow test module for comparative testing of membranes for any desired use.

The test module comprises a pair of metal plates which serve as retainer structures for a pair of plastic plates disposed there between. One of the intermediate plastic plates is provided with channels for passage of the liquid material to be processed. The other plastic plate is provided with a filtrate pocket and filtrate exit holes. The membrane to be tested is supported on a screen in the filtrate pocket and placed between the two plastic plates and the whole assembly, including the outer steel plates clamped together by suitable mechanical means such as bolts.

In operation, the process stream, i.e. the fluid stream to be filtered or otherwise processed, is fed into an inlet port in one of the metal plates, and then into the channels in the top plastic plate. The process stream flows tangentially across the plastic plate in the channels and then out an outlet port in the upper metal plate. As the process stream flows in the channels in the upper plastic plate it is in contact with the underlying filter membrane. A portion of the process stream passes downwardly through membrane as filtrate; the remainder of the process stream passes out the outlet port and is recycled to the inlet port through suitable conduits.

Tangential flow of most of the process stream across the membrane rather than normal flow of the bulk of the process stream through the filter membrane, prolongs the life of the membrane. The filtrate passing through the membrane collects in the screen and underlying filtrate pocket of the lower plastic plate and exits through filtrate holes in the lower plastic plate and filtrate ports in the lower metal plate.

Flow through the test module is under the influence of
a differential pressure between the inlet and exit ports.  The
test module is provided with a pressure gauge mounted in a
pressure sensing port near the inlet and a second pressure gauge
mounted in a pressure sensing port near the outlet.  These pressure
gauges are optional, but preferred.

Detailed Description of the Invention

        The invention will now be described in greater detail in
conjunction with the accompanying drawings, in which:

        Fig. 1 is a perspective view of the test module of the
invention;

        Fig. 2 is a vertical cross-sectional view through the
axes of the inlet port 24 and outlet port 26;

        Fig. 3 is a vertical cross-sectional view at right angles
to the view of Fig. 2 taken on the line 3-3 on the axis of the
inlet port 24;

        Fig. 4 is a perspective view of the test module, without
the gauges, showing the six Allen bolts, the inlet and outlet ports
and the pressure sensing ports;

        Fig. 5 is a bottom plan view of the upper plastic plate 28;

        Fig. 6 is a schematic flow diagram of the method of the
invention.

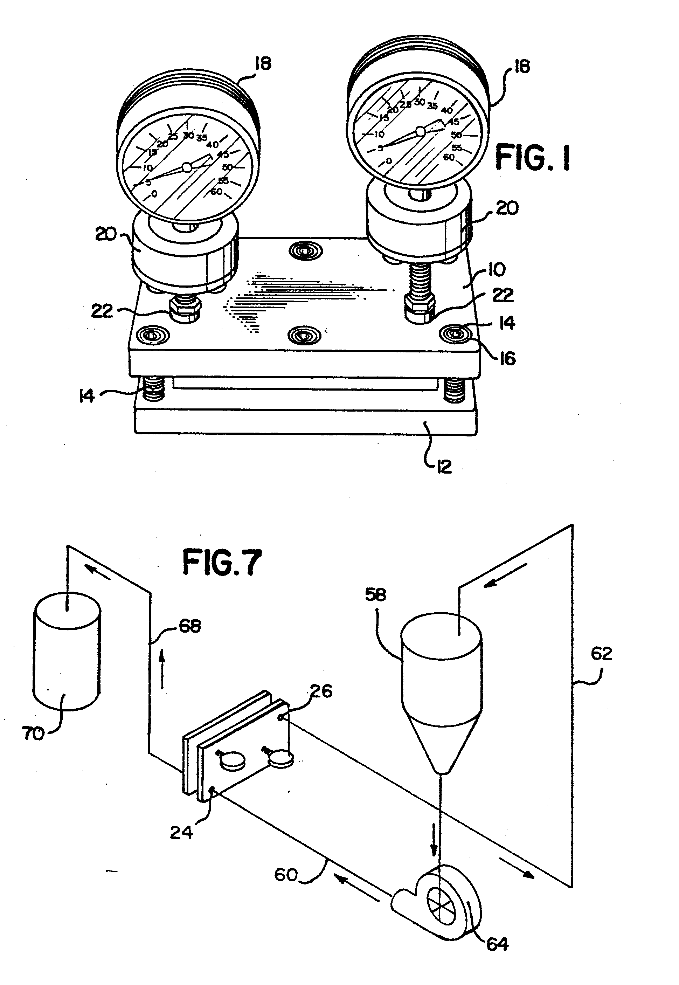

        Referring to the drawings, Fig. 1 shows the test module.
Fig. 1 does, however, show the upper metal plate 10, lower metal plate
12, and four of the six bolts 14 in threaded bore holes 16.  The
preferred embodiment shown uses threaded bolts having hexagonal Allen
screw heads, but any suitable mechanical clamping means may be
employed.

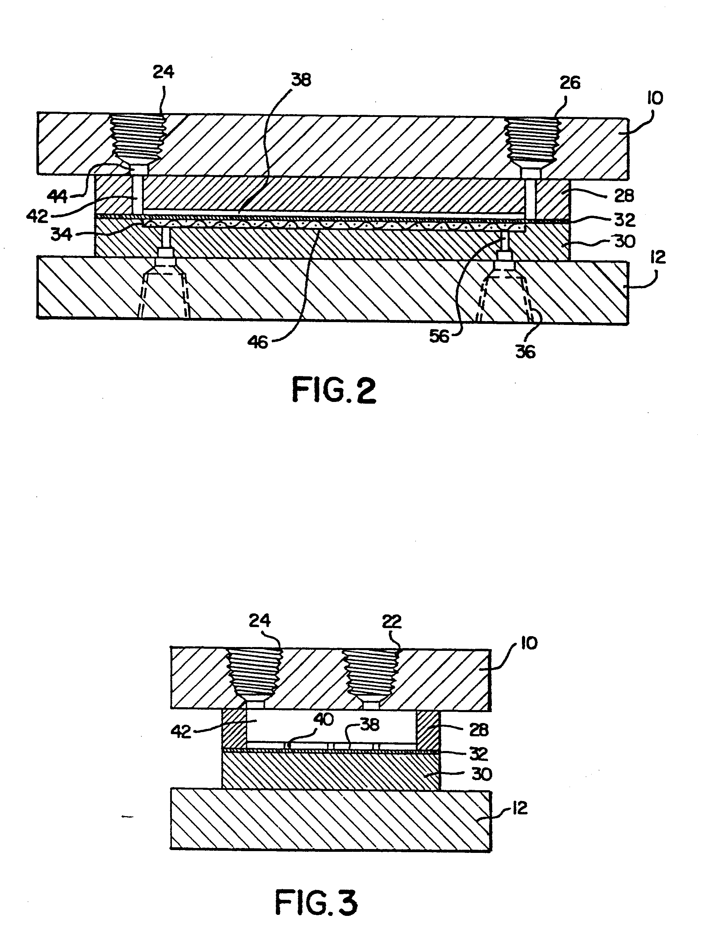

Fig. 1 also shows a pair of pressure gauges 18, each including a diaphragm chamber 20 to isolate the gauge from the flow stream; the pressure gauges and associated diaphragm chambers being commercially available and forming no part of the invention per se. One of the pressure gauges is mounted in a pressure sensing port 22 in upper plate 10 near the inlet port 24 best seen in Fig. 2. The other pressure sensing gauge is mounted in a second pressure sensing port 22 in upper plate 10 near the outlet port 26, again best seen in Fig. 2.

Fig. 2 is a vertical cross-sectional view through the axes of the inlet port 24 and outlet port 26. Fig. 2 also shows the upper plate 10 and the lower plate 12, which are preferably composed of stainless steel. Fig. 2 also shows the upper plastic plate 28, lower plastic plate 30, the filter membrane 32 and underlying support screen 34. The filtrate pocket 46 in lower plate 30 is also visible in Fig. 2. Filtrate exit ports 36 are also shown in lower plate 12 in communication with the filtrate pocket 46 through bore holes 56.

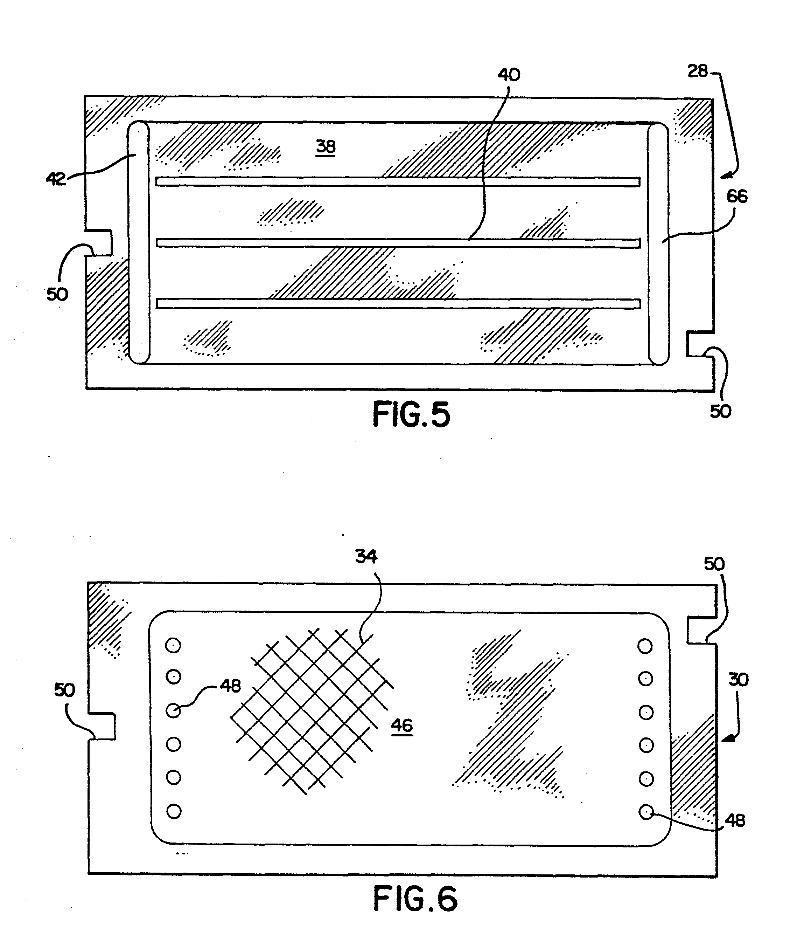

Fig. 3 is a cross-sectional view through the axes of the inlet port 24 and pressure sensing port 22. The thick (7/16") upper plastic plate or channel plate 28 is seen together with its channels 38 and intermediate ribs 40. The channels 38 communicate with the inlet port 24 through an elongated transverse slot or feed stream manifold 42 in the upper plate 28 and bore holes 44 through the upper stainless steel plate 10. Inasmuch as upper steel plate 10 and upper plastic plate 28 are each symmetrical, a second elongated slot manifold 66 (seen in Fig. 5) is disposed at the other end of plate 28 in communication with bore holes 44 in the other end of steel plate 10 and exit port 26 for the feed stream to be recycled.

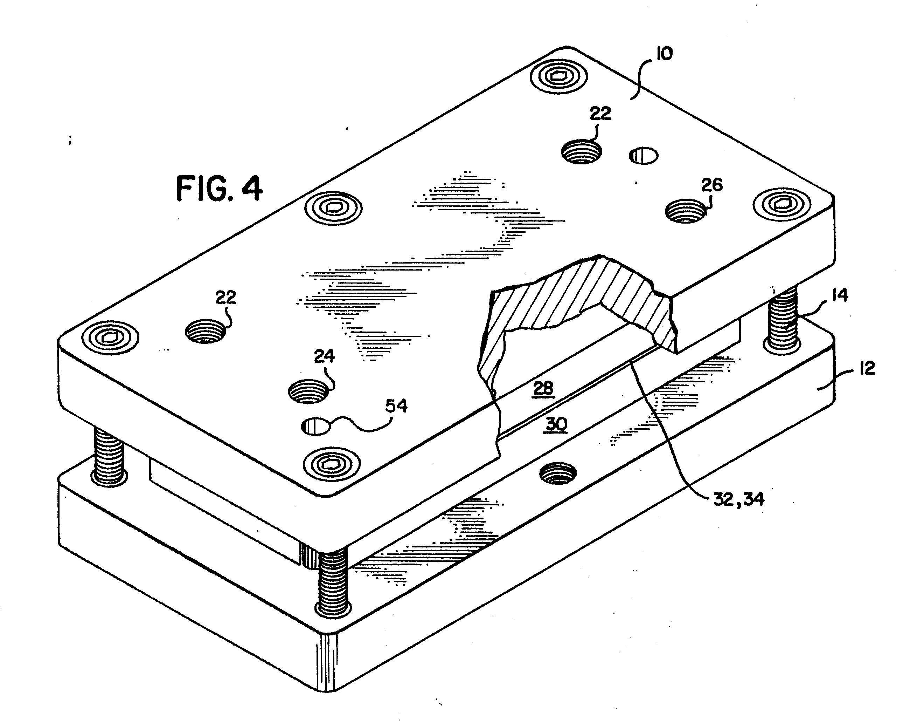

Fig. 4 shows the upper steel plate 10, lower steel plate 12, upper and lower plastic plates 28 and 30, intermediate membrane 32 and support screen 34, bolts 15, pressure sensing ports 22, inlet port 24 and outlet port 26.

Fig. 5 is a bottom plan view of upper plastic plate 28 showing the channels 38, intermediate ribs 40, transverse feed stream slot manifold 42 and transverse feed stream recycle manifold 66.

Fig. 6 is a bottom plan view of the lower plastic plate 30 showing a filtrate pocket 46 co-extensive with the plurality of channels 38 in the upper plastic plate 28. At each end of the filtrate pocket 46, a plurality of bore holes 48 provide for exit of the filtrate. A support screen 34 is dimensioned to fit into and substantially fill the filtrate pocket 46, but not so as to preclude flow of filtrate from the filtrate pocket to the filtrate exit bore holes 48 at the ends of the filtrate pocket 46.

It will be seen in Figs. 5 and 6, that the upper and lower plastic plates 28 and 30 each have a slot 50 at each end. These slots 50 are aligned when the plates are assembled properly, to receive locking pins 52, now shown, which extend through bore holes 54 in each of the steel plates 10 and 12 to position the plates 28 and 30 between the plates 10 and 12 in correct alignment. It will be noted that the slots 50 in opposite ends of the plates 10, 12 and 28 and 30 are positioned in staggered relation, so that the four plates can be assembled in only one relationship and can not be turned end to end. This is, of course, only preferred and not essential.

While the plates 10 and 12 may be made of any metal or, indeed, other material inert to the materials to be processed, stainless steel is preferred for most applications. Similarly, the plastic plates 28 and 30 may be made of any plastic, or other material inert to the ingredients to be processed, but are suitably and preferably made of polypropylene for most applications.

The test module is assembled by placing the lower steel plate 12 on a flat surface, such as a laboratory bench and positioning the lower plastic plate 30 with its planar bottom side in contact with the upper surface of the plate 12. The support screen 34 is then placed in the filtrate pocket 46 in the upper surface of plate 30 and the filter membrane 32 is placed over the support screen. The upper plastic plate 28 is then placed on the filter membrane with its underside and channels 38 in contact with the membrane. The upper steel plate 10 is then placed on the assembly and the locking pins 52, not shown, are inserted in the slots 50 in the ends of the plastic plates 28 and 30 and bore holes 54 in plates 10 and 12 in order to position all of the elements in the correct orientation. The Allen bolts 14 are then threaded into the bore holes 14 in the plates 10 and 12 and tightened using an Allen wrench to bring the entire assembly into tight, operable, leak proof, condition, without the need for any gaskets or other sealing means. The planar perimeters of the plastic plates 28 and 30 provide a suitable seal to prevent leakage under the compression of the bolts 14 without the need for gaskets or other sealing means.

While the inlet port 24 and outlet port 26 are shown to be aligned in Figs. 2 and 3, in a preferred embodiment of the invention they are somewhat staggered as shown in Figs. 1 and 4. This is also true of the pressure sensing ports 22 which are shown to be aligned in Figs. 2 and 3, but which are staggered in Figs. 1 and 4.

Fig. 7 is a schematic flow diagram of the method of the invention and operation of the devices shown in Figs. 1-6. This

0191249

figure shows a product tank 58 as a source of feed to be processed. The feed stream flows through pump 64 and a suitable conduit 60 to the inlet port 24 of the test module. The product stream to be processed then flows through bore hole 44 in plate 10 to feed stream manifold 42 in upper plastic plate 28 and longitudinally through channels 38 tangentially in contact with the filter membrane 32. The bulk of the process stream thus reaches the exit manifold 66 and continues out the outlet port 26 into conduit 62 in which it is recycled to the product tank 58. The portion of the process stream which passes through the filter membrane 32 exits the manifold 42, and proceeds through exit bore holes 48 into conduit 68 to filtrate/permeate receiver 70.

As best seen in Fig. 1, the pressure gauges are protected from contact with the product stream by diaphragm chambers 20 below pressure gauges 18. These are conventional and well-known in the art and serve to separate and prevent contact of the fluid stream to be processed from the pressure gauges. A suitable oil or other hydraulic fluid above the intermediate diaphragm, not shown, transmits the pressure of the process fluid to the gauge, in known manner.

It will be apparent to those skilled in the art, that the novel test module described herein has a myriad of uses limited only by the imagination of the user. To merely suggest the wide application of the test module, the following specific uses are listed. These uses are merely illustrative and are not to be construed as limiting.

1. Cell concentrations in the tangential flow mode with any microporous or UF membrane.

2. Molecular separations in the tangential flow mode with any UF membrane.

3. Counter current dialysis or parallel dialysis with dialysis or UF membranes.

4. Sterile filtrations using microporous membranes.

5. Depyrogenation of small volumes using either low molecular weight cut-off UF membranes or hydrophobic adsorption.

6. Flow decay analysis with microporous membranes or prefilters in the straight through single pass mode.

7. Flow decay analysis with most solvent systems in the straight through mode or tangential flow mode using microporous or UF membranes.

8. Analysis of any special filtration problem such as cell washing or red blood cell concentration.

9. Scale up studies in fermentation applications.

10. Continuous fermentation studies.

The method of employing the novel test module is apparent from the description of the device and its operation and the multiplicity of uses listed above and others which will be apparent to those skilled in the art. However, in general, the method is carried out using a selected membrane to be evaluated, under conditions appropriate in view of the proposed industrial scale use, again, generally speaking, operating pressures do not exceed about 60 lbs. gauge, and are usually on the order of about 1 to 50 lbs. gauge. The pressure can be controlled to the desired optimum by adjusting the speed or output volume of the pump 64, in known manner. The pressure differential may vary from about 0.1 to about 600 psi, but is usually about 1 to 50 psi gauge, but this may be varied as desired, for specific applications.

What is claimed is:

1.  A device for testing membranes for use in laboratory or industrial applications, which comprises upper and lower plate means adapted to receive a membrane to be tested therebetween:

said upper plate means having inlet and outlet ports for the fluid material to be processed, and at least one channel communicating between said inlet and outlet ports;

said lower plate means having a pocket to receive filtrate passing through said membrane and at least one exit port for said filtrate; and

means to clamp said upper and lower plates together to hold a membrane to be tested therebetween without leakage of the material to be processed.

2.  A laboratory scale device of claim 1 for testing filter membranes to predict their operability on industrial scale use in the form of a tangential flow test module, comprising:

a)  upper and lower metal plates;

b)  upper and lower plastic plates positioned intermediate said metal plates;

c)  a support means to support a membrane to be tested;

d)  said lower plastic plate having a filtrate pocket therein adapted to receive said membrane support means and at least one filtrate exit port;

e)  said upper plastic plate having at least one channel means communicating between a feed stream entrance manifold and a feed stream exit manifold;

f)  said upper metal plate having:

1)  an entry port in communication with said entrance manifold and an exit port in communication with said exit manifold;

-9-

0191249

2) pressure sensing ports adjacent said entry
   port and said exit port; and

g) said lower metal plate having filtrate exit ports
   in communication with the filtrate exit ports in
   said lower plastic plate.

-10-

FIG. 1

FIG. 7

FIG.2

FIG.3

FIG. 4

0191249

0191249

FIG.5

FIG.6